Europäisches Patentamt

European Patent Office

Office européen des brevets

(11) Numéro de publication : **0 331 597 B1**

(12) **FASCICULE DE BREVET EUROPEEN**

(45) Date de publication du fascicule du brevet :
**11.11.92 Bulletin 92/46**

(51) Int. Cl.⁵ : **B60P 1/26**

(21) Numéro de dépôt : **89460005.5**

(22) Date de dépôt : **14.02.89**

(54) **Mécanisme de commande d'ouverture et de fermeture de porte de benne basculante, notamment de remorque agricole.**

(30) Priorité : **29.02.88 FR 8802825**

(43) Date de publication de la demande :
**06.09.89 Bulletin 89/36**

(45) Mention de la délivrance du brevet :
**11.11.92 Bulletin 92/46**

(84) Etats contractants désignés :
**AT BE CH DE ES FR GB GR IT LI LU NL SE**

(56) Documents cités :
**DE-U- 8 603 758
FR-A- 2 576 257
FR-E- 65 449
US-A- 3 759 406**

(73) Titulaire : **ETABLISSEMENTS ROLLAND S.A.
Bourg de Pencran, B.P. 153
F-29311 Landerneau Cedex (FR)**

(72) Inventeur : **Emily, Jean-Yves
Keranna Bourg de Pencran
F-29311 Landerneau (FR)**

(74) Mandataire : **Le Guen, Louis François
CABINET Louis LE GUEN 38, rue Levavasseur
B.P. 91
F-35802 Dinard Cédex (FR)**

EP 0 331 597 B1

Jouve, 18, rue Saint-Denis, 75001 PARIS

## Description

La présente invention concerne un mécanisme de commande d'ouverture et de fermeture de la porte d'une benne basculante et, plus particulièrement, d'une benne basculante de remorque agricole.

A titre d'exemple, de tels mécanismes sont décrits dans les documents FR-E-65 449, FR-A-2 576 257 et DE-U-8 603 758. Chaque mécanisme, qui y est décrit, comprend, de chaque côté longitudinal de la benne, un premier bras longitudinal à une extrémité duquel est suspendu le bord vertical correspondant de la porte de la benne, ce premier bras pouvant pivoter autour d'un premier axe transversal, qui est porté par la benne basculante, et ayant son autre extrémité reliée par une articulation à l'extrémité libre d'un second bras qui pivote autour d'un second axe transversal, qui est porté par le châssis de la benne. La benne bascule autour d'un troisième axe de basculement, également porté par le châssis. Pour que la porte s'ouvre en reculant et en montant quand la benne bascule, il faut que la distance entre le premier et le troisième axe soit au moins aussi grande que la longueur du second bras. Ainsi, le premier axe et la porte commencent à monter plus vite que l'articulation. Ce mécanisme est satisfaisant quand le premier axe se trouve au niveau le plus haut des ridelles de la benne.

Quand on ajoute des éléments de rehaussement sans remonter le premier axe, l'ouverture de la porte nécessite que l'arrière des éléments de rehaussement soit coupé en biais. Il n'y a alors plus d'étanchéité entre la porte et les éléments de rehaussement au-dessus des bords en biais. Si l'on veut remplir la benne jusqu' en haut, il faut prévoir des moyens d'étanchéité supplémentaires. Dans le document FR-A-2 576 257, il est alors proposé de remonter le premier axe jusqu' au niveau supérieur de l'élément de rehaussement le plus haut et d'allonger le second bras en conséquence. Ces modifications permettent l'ouverture de la porte sans altérer l'étanchéité, mais elles nécessitent des opérations de montage et de démontage des supports des premiers axes, plus l'addition d'une rallonge au second bras, ce qui n'est pas pratique et rebute l'utilisateur.

Un objet de l'invention consiste à prévoir un mécanisme de commande qui ne souffre pas des mêmes inconvénients que les mécanismes connus, qui permet d'installer sur des ridelles de base des éléments de rehaussement jusqu'à la hauteur voulue et qui permet l'ouverture et la fermeture étanche de la porte, sans avoir à modifier en quoi que ce soit le mécanisme.

Suivant une caractéristique de l'invention, il est prévu de loger chaque premier axe dans un trou oblong longitudinal de la paroi latérale de la benne basculante, avec des moyens pour déplacer chaque premier axe dans son trou oblong vers l'arrière dès le début du relèvement de la benne et vers l'avant à la fin de la descente de la benne.

Suivant une autre caractéristique, ces moyens sont constitués par un galet transversal logé entre deux cames portées par le premier bras et descendant obliquement de l'arrière vers l'avant, la came arrière étant poussée vers l'arrière par le galet au moins au début de la fermeture et la came avant étant poussée par le galet vers l'avant au moins à la fin de la fermeture de la porte.

Suivant une autre caractéristique, les cames ont des longueurs limitées.

Suivant une autre caractéristique, les deux cames sont les bords parallèles d'une rainure pratiquée dans ledit premier bras.

Suivant une autre caractéristique, la direction de la rainure fait un angle d'environ 35° avec la verticale.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

la Fig. 1 est une vue schématique en élévation d'une remorque à benne basculante équipée d'un mécanisme de commande et de fermeture de porte, suivant l'invention, la benne étant en position de repos, et

les Figs. 2 à 4 sont des vues schématiques en élévation de la remorque de la Fig. 1, la benne basculante ayant des inclinaisons croissantes.

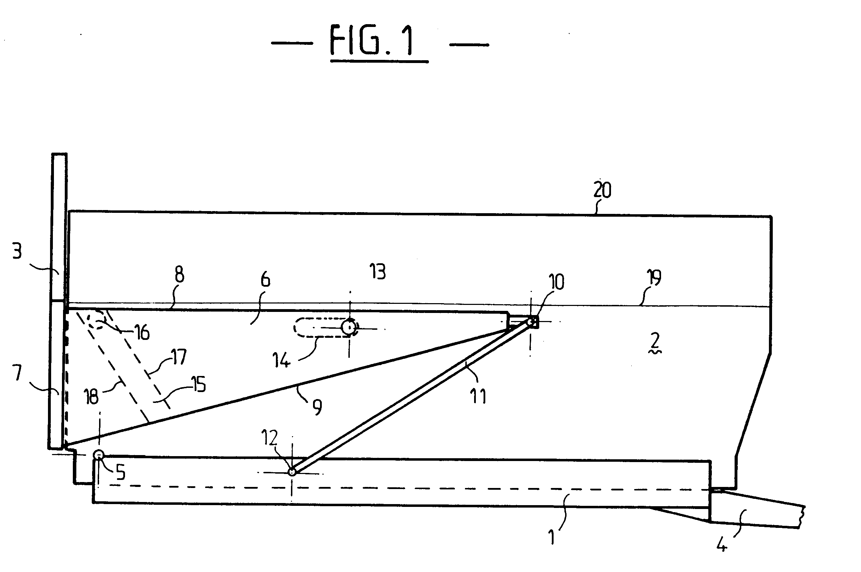

La remorque de la Fig. 1 comprend un châssis 1 et une benne basculante 2 fermée par une porte arrière 3. Les roues des essieux du châssis ne sont pas montrées pour simplifier le dessin, non plus que le vérin servant à faire basculer la benne 2. Le châssis 1 est, dans l'exemple décrit, pourvu d'un timon 4, mais le mécanisme de l'invention s'applique également aux remorques automotrices. L'axe 5 de basculement de la benne 2 est monté à l'arrière du châssis 1.

La porte 3 est supportée par deux mécanismes de commande symétrique, dont un est visible dans les dessins, l'autre étant symétrique de l'autre côté de la remorque. Chaque mécanisme comprend un bras 6, dont la forme générale est triangulaire pour lui donner la rigidité suffisante pour supporter le poids de la porte. Le triangle du bras 6 a un petit côté 7 auquel la porte 3 est accrochée, un grand côté 8 pratiquement horizontal et un grand côté oblique 9 réunissant les deux autres. Au sommet 10, commun aux côtés 8 et 9, est prévue une articulation avec un bras rectiligne 11 dont l'autre extrémité pivote autour d'un axe 12 qui est monté sur le châssis 1. Près du côté 8, est prévu un axe court 13 qui est prisonnier dans un trou oblong 14 d'une plaque, non montrée, fixée sur la ridelle correspondante de la benne basculante 2. Au repos, le trou oblong 14 est orienté horizontalement.

Par ailleurs, dans la zone voisine du côté 7 du triangle, entre les côtés 8 et 9, est prévue une rainure 15 qui descend obliquement de l'arrière vers l'avant. Au repos, dans la rainure 15, se loge un galet 16 dont le diamètre est égal, au jeu nécessaire près, à la distance entre le bord avant 17 et le bord arrière 18 de la rainure 15. Le galet 16 est fixé au flanc correspondant de la benne basculante 2.

Comme le montre la Fig. 1, au repos, la rainure 15 fait un angle d'environ 35° avec la verticale et passe à l'avant de l'axe de basculement 5.

Dans le dessin, on a supposé que le bord supérieur 19 de chaque ridelle était juste au-dessus du trou oblong 14 et que la ridelle était surmontée d'un élément de rehaussement qui avait son bord supérieur 20 nettement plus haut que le bord 19.

On va maintenant décrire le fonctionnement du mécanisme de commande d'ouverture et de fermeture, qui est visible sur les dessins, étant entendu que le fonctionnement de l'autre mécanisme s'en déduit de façon évidente.

Au repos, la galet 16, Fig. 1, est en haut de la rainure 15 et l'axe 13 est à l'avant du trou oblong 14.

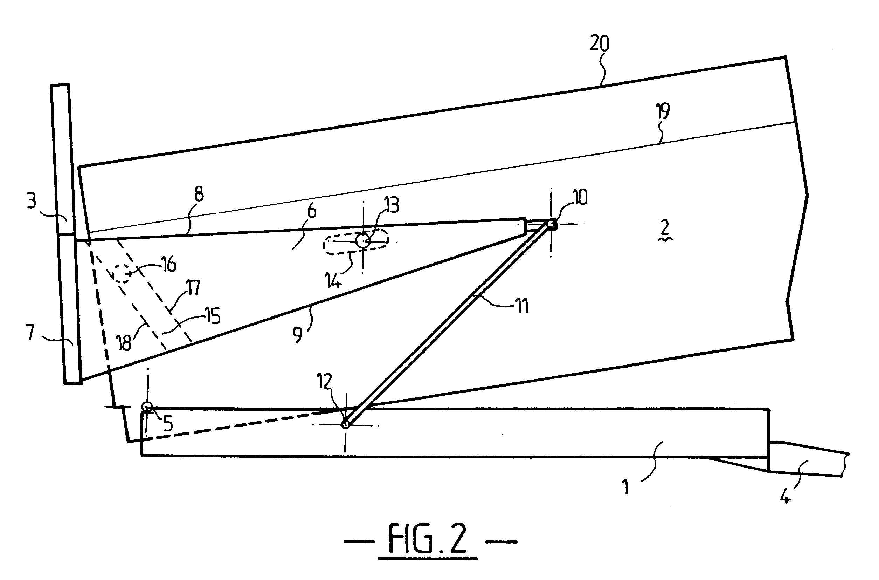

Dès que la benne 2 commence à pivoter en montant autour de l'axe 6, Fig. 2, le galet 16 pousse le bord arrière 18 de la rainure 15, ce qui tend à faire reculer la porte 3, en même temps que le trou oblong 14 soulève l'axe 13. Il en résulte que l'axe 13 recule dans le trou 14.

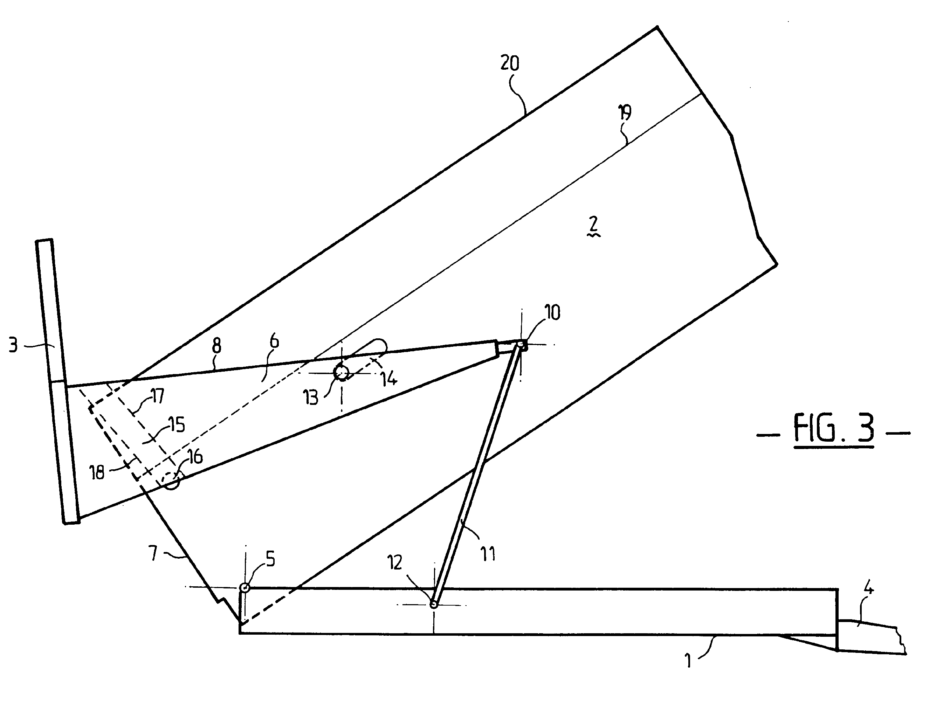

La Fig. 3 montre l'inclinaison de la benne 2 pour laquelle l'axe 13 est arrivé tout à l'arrière du trou oblong 14. Simultanément, le galet 16 sort de la rainure 15 par le bas. A partir de cette position, le poids du bras 6 et de la porte 3 assure le blocage de l'axe 13 à l'arrière du trou oblong 14 qui est incliné.

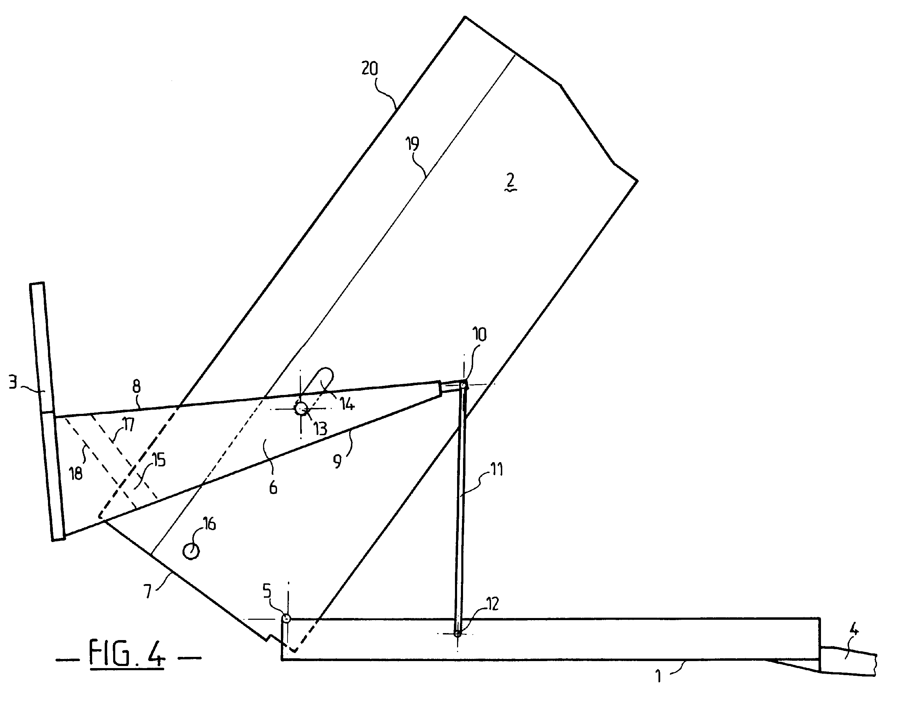

La Fig. 4 montre l'inclinaison pour laquelle l'ouverture de la porte 3 est complète. Le galet 16 est complètement hors de la rainure 15.

Pendant tout le mouvement, le bras 11, lié à l'articulation 10, tourne autour de son axe de rotation 12, en maintenant le côté 8 du bras 6 pratiquement horizontal quelle que soit l'inclinaison de la benne 2, et par conséquent la porte 3 pratiquement verticale. Il apparaît ainsi que la porte 3 se déplace pratiquement en translation. Le recul de l'axe 13 dans le trou oblong 14 permet, notamment au début du basculement de la benne, de faire reculer la porte 3 plus vite que ne recule, en descendant, le bout arrière du bord 20 de l'élément de rehaussement. Ainsi, les coins arrière des éléments de rehaussement n'ont pas besoin d'être coupés en biais. L'étanchéité de la remorque est donc parfaite. En pratique, la longueur du trou oblong 14 détermine la hauteur maximale du bord supérieur 20. Cette longueur peut être choisie compatible avec les hauteurs admissibles pour les remorques agricoles d'usage courant.

Dans l'opération de fermeture de la porte, la benne et la porte passent de la position montrée à la Fig 4 à celle qui est montrée à la Fig. 3. Entre la position de la Fig. 3 et celle de la Fig. 2, le galet 16, entré dans la rainure 15, appuie sur le côté 16 de celle-ci, pour repousser le bras 6 vers l'avant et donc l'axe 13 vers l'avant du trou oblong 14. Ainsi, l'axe 13 ne peut rester à l'arrière du trou ce qui laisserait la porte ouverte. Le bord 16 de la rainure assure donc l'étanchéité arrière de la benne.

En réalité, les bords avant 17 et arrière 18 de la rainure 15 constituent les surfaces de deux cames sur lesquelles agit le galet 16. Bien entendu, dans l'exemple de réalisation montré, ces cames sont parallèles, mais cela n'est pas obligatoire. En particulier, la partie basse entre les cames peut être plus évasée de manière à, par exemple, assurer le guidage du galet 16 lors de la descente de la benne. En variante, les points bas de ces cames peuvent ne pas coïncider avec le côté oblique 9 du bras 6, mais descendre plus bas ou s'arrêter plus haut.

On notera que les éléments de rehaussement entre le bord 20 et le bord 19 de la ridelle peuvent être en plusieurs parties, les parties sont superposables dans n'importe quel ordre car on n'a pas besoin de prévoir la plus haute, coupée en biais à l'arrière. Ainsi, on peut normaliser les éléments de rehaussement.

**Revendications**

1. Mécanisme de commande d'ouverture et de fermeture de la porte (3) d'une benne basculante, plus particulièrement, d'une benne basculante de remorque agricole, comprenant, de chaque côté longitudinal de la benne, un premier bras longitudinal (6) à une extrémité duquel est suspendu le bord vertical correspondant de la porte (3) de la benne, ce premier bras (6) pouvant pivoter autour d'un premier axe transversal (13), qui est porté par la benne basculante, et ayant son autre extrémité reliée par une articulation (10) à l'extrémité libre d'un second bras (11) qui pivote autour d'un second axe transversal (12), qui est porté par le châssis (1) de la benne, la benne basculant autour d'un troisème axe de basculement (5), également porté par le châssis (1), caractérisé en ce que chaque premier axe (13) est logé dans un trou oblong longitudinal (14) de la paroi latérale de la benne basculante, avec des moyans pour déplacer chaque premier axe (13) dans son trou oblong (14), vers l'arrière dès le début du relèvement de la benne et vers l'avant à la fin de la descente de la benne.

2. Mécanisme de commande suivant la revendication 1, caractérisé en ce que ces moyens sont constitués par un galet transversal (16) logé entre deux cames (17, 18) portées par le premier bras (6) et descendant obliquement de l'arrière par le galet (16) au moins au début de la fermeture et la came avant (17) étant poussée par le galet (16) vers l'avant au moins à la fin de la fermeture de la porte (3).

3. Mécanisme de commande suivant la revendication 2, caractérisé en ce que les cames (17, 18) ont des longueurs limitées.

4. Mécanisme de commande suivant la revendication 2 ou 3, caractérisé en ce que les deux cames (17, 18) sont les bords parallèles d'une rainure (15) pratiquée dans ledit premier bras (6).

5. Mécanisme de commande suivant la revendication 4, caractérisé en ce que la direction de la rainure (15) fait un angle d'environ 35° avec la verticale.

**Patentansprüche**

1. Steuermechanismus zum Öffnen und Schließen der Klappe (3) eines Kippfahrzeugs, insbesondere eines landwirtschaftlichen Anhängers, enthaltend an jeder Längsseite des Fahrzeugs eine erster Längsarm (6), an dessen einem Ende die entsprechende senkrechte Kante der Klappe (3) des Fahrzeugs aufgehängt ist, wobei der erste Arm (6) um eine vom Kippfahrzeug getragene erste Querachse (13) schwenkbar ist, und dessen anderes Ende über ein Gelenk (10) mit dem freien Ende eines zweiten Arms (11) verbunden ist, der um eine vom Chassis (1) des Fahrzeugs getragene zweite Querachse (12) schwenkbar und das Fahrzeug um eine ebenfalls vom Chassis (1) getragene dritte Kippachse (5) kippbar ist, **dadurch gekennzeichnet,** daß jede erste Achse (13) in einem Längsloch (14) der Seitenwand des Kippfahrzeugeh gelagert ist und Mittel zum Verschieben jeder ersten Achse (13) in ihrem Langloch (14) nach hinten vom Anfang der Aufrichtung des Fahrzeuges und nach vorne zum Ende der Absenkung des Fahrzeuges vorgesehen sind.

2. Steuermechanismus nach Anspruch 1, **dadurch gekennzeichnet,** daß die genannten Mittel durch eine quer liegende Führungsrolle (16) gebildet sind, die zwischen zwei Hebelarmen (17, 18) gelagert ist, die durch den ersten Längsarm (6) getragen sind und schräg von hinten über die Führungsrolle (16) wenigstens bis zum Anfang des Schließens abfallen, wobei der vorderere Hebelarm (17) über die Führungsrolle (16) nach vorne wenigstens bis zum Ende des Schließens der Klappe (3) hinausragt.

3. Steuermechanismus nach Anspruch 2, **dadurch gekennzeichnet,** daß die Hebelarme (17, 18) begrenzte Längen haben.

4. Steuermechanismus nach Anspruch 2 oder 3, **dadurch gekennzeichnet,** daß die beiden Hebelarme (17, 18) die parallelen Kanten einer in dem ersten Längsarm (6) ausgebildeten Nut (15) sind.

5. Steuermechanismus nach Anspruch 4, **dadurch gekennzeichnet,** daß die Richtung der Nut (15) mit der Vertikalen einen Winkel von etwa 35° bildet.

**Claims**

1. An opening and closing control mechanism of the door (3) of a tipping hopper, more particularly of an agricultural trailer tipping hopper comprising on each longitudinal side of the hopper, a first longitudinal arm (6) at one end of which is suspended the corresponding vertical edge of the door (3) of the hopper, this first arm (6) being capable of pivoting around a first transverse axle (13) which is supported by the tipping hopper and having its other end connected by an articulation (10) at the free end of a second arm (11) which pivots around a second transverse axle (12) which is supported by the chassis (1) of the hopper, the hopper swinging around a third tipping axle (5) likewise supported by the chassis (1), characterised in that each first axle (13) is lodged in a longitudinal oblong hole (14) of the lateral wall of the tipping hopper with means for displacing each first axle (13) in its oblong hole (14) to the rear from the beginning of the raising up of the hopper to the front at the end of the descent of the hopper.

2. A control mechanism according to claim 1, characterised in that these means are constituted by a transverse roller (16) lodged between two cams (17,18) supported by the first arm (6) and descending obliquely from the rear by the roller (16) at least at the beginning of the closing and the front cam (17) being pushed by the roller (16) to the front at least at the end of the closing of the door (3).

3. A control mechanism according to claim 2, characterised in that the cams (17,18) have limited lengths.

4. A control mechanism according to claim 2 or 3, characterised in that the two cams (17,18) are the parallel edges of a groove (15) made in the said first arm (6).

5. A control mechanism according to claim 4, characterised in that the direction of the groove (15) forms an angle of about 35° with the vertical.

— FIG. 1 —

EP 0 331 597 B1

— FIG.2 —

— FIG. 3 —

EP 0 331 597 B1

— FIG. 4 —